# EUROPÄISCHE PATENTSCHRIFT

(11) **EP 0 436 918 B1**
(45) Veröffentlichungstag und Bekanntmachung des Hinweises auf die Patenterteilung: **28.06.1995**
(21) Anmeldenummer: 90125264.3
(22) Anmeldetag: 21.12.1990
(51) Int. Cl.: C08J 7/12, B29C 59/14

(54) **Verfahren zur Behandlung von Polyolefinfolien**
Process for treating a polyolefin film
Procédé pour traiter un film de polyoléfine

(30) Priorität: 03.01.1990 DE 4000045
(43) Veröffentlichungstag der Anmeldung: 17.07.1991
(73) Patentinhaber: Wolff Walsrode Aktiengesellschaft, D-29655 Walsrode (DE)
(72) Erfinder: Thurm, Siegfried, Dr., W-4005 Meerbusch 3 (DE); Reiners, Ulrich, Dipl.-Ing., W-3044 Neuenkirchen (DE); Schinkel, Ingo, Dr., W-3030 Walsrode 1 (DE); Kowitz, Manfred, W-4130 Moers 3 (DE)
(74) Vertreter: Braun, Rolf, Dr.

(56) Entgegenhaltungen:
- EP-A- 0 109 334
- EP-A- 0 311 197
- DATABASE WPIL, Accession Nr. 82-71220E [34], Derwent Publications Ltd, London,GB; & JP-A-57 115 431
- DATABASE WPI, Accession Nr. 79-60492B [33], Derwent Publications Ltd, London,GB; & JP-A-54 083 971

## Beschreibung

Die Erfindung betrifft ein Verfahren zur Behandlung von Polyolefinfolien mit einem Niederdruckplasma zur Verbesserung der Haftungseigenschaften in Verbunden, insbesondere gegenüber Klebstoffen und Druckfarben.

Verfahren zur Vorbehandlung von Polyolefinen mittels eines Niederdruckplasmas sind literaturbekannt. So beschreibt die britische Patentschrift 997 093 ein Verfahren zur Behandlung von Polymeren aus Kohlenwasserstoffen in einer elektrischen Entladung bei einem Druck von bis zu 1,3 mbar, um durch eine anschließende Pfropfpolymerisation die Einfärbbarkeit des Polymeren zu verbessern.

Es werden keine Angaben über Leistungs- bzw. Energiedichte oder den Abstand der Elektroden während der Vorbehandlung gemacht.

Die US-A-3 274 091 beschreibt ein Verfahren zur Behandlung von polymeren Folien in einer Gasentladung in einer Atmosphäre aus einem organischen Gas z.B. Acrylsäure und einem Trägergas, z.B. Stickstoff. Es werden keine Angaben über den Druck während des Prozesses gemacht, doch legt die beschriebene Vorrichtung zur Durchführung des erfindungsgemäßen Verfahrens die Vermutung nahe, daß das Verfahren bei einem Druck nahe dem Normaldruck (1013 mbar) durchgeführt wird. Der Abstand der Elektroden zu den zu behandelnden Polymeren beträgt 0,25 bis 3,2 mm. Die Energiedichte liegt in der Größenordnung von 16 x 10⁻³ Ws/cm².

In der US-A-3 686 018 wird ein Verfahren zur Vorbehandlung organischer Substrate in einem Niederdruckplasma und anschließender Behandlung des vorbehandelten Substrats in einer oxidierenden Gasatmosphäre zur Verringerung der Gaspermeation durch eine anschließend aufgedampfte Metallschicht beansprucht. Die dort beschriebene Vorbehandlung geschieht bei einem Gasdruck von 1,3 x 10⁻² bis 1,3 mbar. Der Abstand der Elektroden von dem organischen Substrat beträgt 50 mm. Die Energiedichte auf dem Substrat ist nicht spezifiziert.

In dem japanischen Patent JA 58-147 433 wird ein Verfahren zur Vorbehandlung von Spritzgußteilen in einem Mikrowellenplasma bei einer Frequenz von 2,45 GHz beschrieben. Der Druck liegt zwischen 0,13 x 10⁻² und 13 mbar, ein Elektrodenabstand ist nicht angegeben, da die Mikrowellenstrahlung nicht kapazitiv, sondern wahrscheinlich über einen Hohlleiter und ein Quarzfenster in den Rezipienten eingekoppelt wird. Die Energiedichte auf dem Substrat ist nicht angegeben.

In der EP 0 127 149 wird ein Verfahren zur Behandlung von Thermoplasten beschrieben, wobei der Thermoplast bei Temperaturen gleich oder höher der Schmelz- bzw. der Glastemperatur des Thermoplasten einer Plasmabehandlung unterzogen wird, um die Oberflächenenergie zu erhöhen und damit die Haftung beim Lackieren, Drucken und Laminieren zu verbessern. Ein Nachteil dieses Verfahrens besteht in einer möglichen Verminderung der mechanischen und optischen Eigenschaften, d.h. Zugfestigkeit, Glanz und Transparenz des Thermoplasten.

Grundlagen und Anwendungsmöglichkeiten des Niederdruckplasmas werden weiterhin erörtert in der Zeitschrift Adhäsion Heft 5, 1989, Seiten 10 bis 15 und von G.Ecker, das Niederdruckplasma 1988, VDI-Verlag Düsseldorf.

Der Erfindung liegt die Aufgabe zugrunde ein verbessertes Verfahren zur Vorbehandlung von Polyolefinfolien zur Verfügung zu stellen.

Gegenstand der Erfindung ist ein Verfahren zur Behandlung von Polyolefinfolien, beispielsweise solchen aus Polypropylen, Polyethylen, einem copolymeren oder einer Mischung daraus, durch Behandlung der Polyolefinfolien mit einem Niederdruckplasma, dadurch gekennzeichnet, daß das Niederdruckplasma über Elektroden durch elektrische Felder mit Frequenzen bis 100 MHz angeregt wird, daß das Prozeßgas sauerstoffhaltige Gase enthält, daß der Partialdruck der sauerstoffhaltigen Prozeßgase mindestens 5 x 10⁻², insbesondere 10⁻¹ mbar, die Energiedichte auf der Komponente aus Polyolefinen mindestens 0,01 Ws/cm² und maximal 10 Ws/cm² und der Abstand der Elektroden von der Polyolefinfolie mindestens 60 mm beträgt, und die Temperaturen während der Behandlung der Polyolefinfolien maximal +30°C betragen.

Durch die erfindungsgemäBe Vorbehandlung wird die Haftung der Polyolefinfolie in Verbunden erheblich verbessert.

Die für die Polyolefinfolie zu verwendenden Polyolefine haben vorzugsweise ein gewichtsmittleres Molekulargewicht MW von etwa 50 000 bis 300 000, vorzugsweise von 80 000 bis 200 000, wobei MW durch Gelchromatographie in bekannter Weise ermittelt wird.

Vorzugsweise wird ein isotaktisches Polypropylen mit einer Dichte von 0,9 bis 0,91 g/cm³ und einem Schmelzflußindex von 1 bis 4 g/10 min bei 230°C/21,6 N (nach DIN 53 735) verwendet.

In einer bevorzugten Ausführungsform werden aus Polyolefin hergestellte Folien erfindungsgemäß vorbehandelt.

Die Folien können ein- oder mehrschichtig aufgebaut sein.

Besonders bevorzugte Beispiele für mehrschichtige Folien haben eine Basisschicht aus einem Polypropylen.

Die Basisschicht kann z.B. 3 bis 15 Gew. %, vorzugsweise 8 bis 12 Gew. % mit dem Polypropylen unverträgliche Additive, vorzugsweise anorganische Additive, wie Kalciumcarbonat, Siliciumdioxid, Natriumaluminiumsilikat und/oder Titandioxid enthalten, wodurch eine Opakisierung der Folie erreicht werden kann. Es kann aber auch ein organisches, unverträgliches Additiv fein verteilt in der Basisschicht enthalten sein, vorzugsweise Teilchen aus Polystyrol, Polymethylmethacrylat, Polytetrafluorethylen, Polycarbonat und/oder Copolymeren dieser Verbindungen. Unverträglichkeit bedeutet dabei, daß solche polymeren Additive einen anderen Schmelzpunkt und/oder ein anderes Streckverhältnis als das Polypropylen aufweisen, so daß es unter geeigneten Voraussetzungen beim biaxialen Orientierungsprozeß der Mehrschichtfolie zum Aufreißen der Polymermatrix und damit zu einer Vakuolenbildung kommt, die auch bei Verwendung anorganischer Additive auftritt. Ein weiterer Gegenstand der vorliegenden Erfindung ist daher auch ein Verfahren zur Herstellung von opaken Mehrschichtfolien, die die erfindungsgemäße Vorbehandlung aufweisen.

In einer bevorzugten Ausführungsform weisen die Folien eine an sich bekannte Heißsiegelschicht auf, insbesondere Copolymere des Propylens.

Die Mehrschichtfolien können außerdem eine Gassperrschicht, vorzugsweise eine Sauerstoffsperrschicht aus einem verseiften Ethylen/ Vinylacetat-Copolymerisat mit 40 bis 85 Mol-% Vinylacetateinheiten, die zumindestens zu 90 Gew.-%, vorzugsweise zu mehr als 96 Gew.-%, verseift sind, und gegebenenfalls übliche Haftvermittlerschichten enthalten. Die Herstellung solcher Ethylen/Vinylalkohol-Copolymerisate ist bekannt. Ein weiterer Gegenstand der vorliegenden Erfindung sind daher auch Verfahren zur Herstellung modifizierter, heißsiegelbarer Mehrschichtfolien, die eine geringe Gasdurchlässigkeit und einen hervorragenden Aromaschutz aufweisen.

Die erfindungsgemäß behandelten Mehrschichtfolien können auf einer Seite eine Thermokaschierschicht aus niedrigsiedenden Polymeren tragen, wobei die andere Seite erfindungsgemäß vorbehandelt ist. Durch Zufuhr von Wärme und unter Druck kann eine solche Folie zunächst gegen andere Substrate heißkaschiert werden und anschließend mit der erfindungsgemäß vorbehandelten Seite verklebt und bedruckt werden.

Die Ausrüstung der Schichten der Folien mit üblichen Additiven und Hilfsmitteln, wie z.B. Gleitmitteln, Antiblockmitteln und Antistatika, in üblichen Mengen, ist möglich.

Die Folien können nach üblichen Verfahren wie Laminierung, Beschichtung oder Schmelz(co)extrusion produziert werden. Die Folien werden vorzugsweise mindestens monoaxial, bevorzugt biaxial gereckt. Dabei wird die Längsreckung vorzugsweise im Verhältnis 5:1 bis 7:1 und die Querreckung im Verhältnis 7:1 bis 10:1 vorgenommen.

In Mehrschichtfolien sollte die Polypropylenbasisfolie vorzugsweise eine Dicke von 20 bis 50 »m und eine heißsiegelbare Schicht vorzugsweise eine Dicke von 0,8 bis 2 »m, besonders bevorzugt um 1 »m, aufweisen.

Die erfindungsgemäß behandelten Folien eignen sich besonders als Verpackungsmaterial.

Die Vorbehandlung in einem Plasma erfolgt in einer Vakuumanlage, wobei die Polyolefinfolie vorzugsweise auf eine Spule aufgewickelt ist und die Folie von einem Wickelwerk von der Abwickelspule auf die Aufwickelspule geführt wird. Typische Prozeßdrucke sind solche zwischen 0,1 und 1 mbar. Als Prozeßgase wurden bevorzugt sauerstoffhaltige Gase wie z.B. O₂, H₂O₂, H₂O, N₂O, NO₂ und O₃ sowie Mischungen mit Edelgasen wie He, Ne, Ar, Kr und Xe benutzt. Die Anregung des Plasmas geschieht durch ein elektrisches Feld mit Frequenzen bis 100 MHz, wobei der bevorzugte Frequenzbereich zwischen 0 und 30 MHz liegt.

Die Polyolefinfolie befindet sich in einem Abstand von mindestens 60 mm zu den Elektroden, an welche das elektrische Feld zur Erzeugung des Plasmas angelegt wird.

Wichtig ist, daß die Energiedichte, die während der Vorbehandlung auf eine Flächeneinheit der Polyolefinfolie auftrifft, einen Wert von 0,01 Ws/cm² nicht unterschreitet, weil sonst die Intensität der Vorbehandlung nicht ausreicht, um eine gute Haftung der Polyolefinfolie in einem Verbund mit anderen Werkstoffen zu erreichen. Andererseits ist eine Energiedichte größer 10 Ws/cm² im allgemeinen nicht günstig, weil in diesem Fall die Oberfläche der Polyolefinfolie irreversibel geschädigt wird, indem in einer oberflächennahen Schicht die Bindung zwischen den olefinen Kettengliedern aufgebrochen werden, so daß eine Grenzschicht mit nahezu oligomeren Kettengliedern geschaffen wird, die in einem nachfolgend herzustellenden Verbund eine schlechte Haftung der Polyolefinfolie im Verbund bewirkt.

Des weiteren ist es wichtig, daß die Temperaturen der Folie während der Behandlung 30°C nicht übersteigt, vorzugsweise im Bereich von -2°C bis 10°C liegt, da ansonsten die Haftung in einem nachfolgend herzustellenden Verbund gering bleibt und der Glanz der Folien deutlich reduziert wird.

Nachdem die Folie in erfindungsgemäßer Weise vorbehandelt worden ist, wird sie der Vakuumanlage entnommen und kann zu einem Verbund weiterverarbeitet werden. Dies kann z.B. dadurch geschehen, daß eine weitere Komponente auf Papier und Karton durch Verkleben aufkaschiert wird oder eine Metallschicht oder eine Schicht aus anorganischen Oxiden aufgebracht wird z.B. durch Aufdampfen. Solche Verbunde werden z.B. in der Verpackungsindustrie eingesetzt und besitzen z.B. hervorragende optische Eigenschaften wie hohen Glanz oder hervorragende Gassperreigenschaften.

Darüber hinaus eignet sich die erfindungsgemäß vorbehandelte Folie in hervorragender Weise zum Bedrucken mit schwierigen Druckfarbensystemen z.B. solchen auf wäßriger Basis. Diese Druckfarben werden aus Umweltschutzgründen im Verpackungsbereich eingesetzt.

In einer besonders bevorzugten Ausführungsform werden biaxial gereckte Polypropylenfolien einseitig erfindungsgemäß vorbehandelt und auf der anderen Seite Corona vorbehandelt. Die Folie wird auf der Corona vorbehandelten Seite nach üblichen Verfahren gegen Karton kaschiert. Der Verbund eignet sich wegen der hohen Klebefreundlichkeit der erfindungsgemäß vorbehandelten Seite für die Verarbeitung in schnellaufenden Faltschachtelklebemaschinen.

### Beispiel 1

Als zu behandelnde Polyolefinfolie eines herzustellenden Verbundes wird eine 20 »m dicke extrudierte, biaxial gereckte Folie aus isotaktischem Polypropylen eingesetzt, die in 150 mm Breite und ca. 1000 m Länge auf einem Wickelkern aufgewickelt ist. Diese Folie wird in eine Vakuumbandbehandlungsanlage der Fa. ULVAC (Chigasaki, Japan), Typ EWH 015) eingesetzt und die Folie über mehrere Breitstreck- und Tänzerwalzen auf eine gekühlte Leitwalze geführt. Von dort wird die Folie wiederum über Breitstreck- und Tänzerwalzen auf den Aufwickelkern geführt.

Konzentrisch zu der Leitwalze in einem Abstand von 75 mm befindet sich eine Elektrode von 163 mm Breite und 293 mm Länge, die mit einer Dunkelraumabschirmung versehen ist.

Nach dem Einbau der Folie wird die Anlage geschlossen und auf einen Druck von 10⁻⁵ mbar evakuiert.

Anschließend wird in die Anlage O₂ mit einem Gasfluß von 168 Ncm³/min zugegeben, so daß sich ein Gesamtdruck von 1 x 10⁻¹ mbar in der Vakuumanlage einstellt. Danach wird das Wickelwerk in der Anlage eingeschaltet und die Folie mit einer Geschwindigkeit von 30 m/min über die gekühlte Leitwalze, die eine Temperatur von -2°C besitzt, an der Elektrode vorbeigeführt und auf der Aufwickelwalze aufgewickelt. Gleichzeitig wird an die Elektrode eine Gleichspannung von -1000 V gelegt. Dadurch brennt zwischen Elektrode und Folie ein Plasma mit einem Strom von ca. 0,4 A, d.h. die Plasmaleistung beträgt ca. 400 W. Bei der obengenannten Geschwindigkeit beträgt die Verweildauer der Folie in der Plasmazone ca. 0,6 sec. Bei einer Elektrodenfläche von ca. 480 cm² ergibt sich auf der Folie eine Energiedichte von ca. 0,5 W/cm².

Nachdem ca. 800 m der Folie behandelt wurden, wird die Hochspannung abgeschaltet, das Wickelwerk abgestellt und die Leitwalze auf ca. 30°C aufgeheizt. Anschließend wird die Vakuumbehandlungsanlage belüftet und die Folie entnommen.

Zur Herstellung eines Verbundes wird ein Stück dieser vorbehandelten Folie sowie ein Stück unbehandelter Folie auf einen Karton kaschiert.

Dazu wird der Karton mit einem ca. 50 »m dicken Film des Klebstoffs Adhesin 7034 der Fa. Henkel, Düsseldorf, eingestrichen, die unbehandelte und behandelte Folie aufgebracht und für 5 Minuten mit einem Druck von 10 g/cm² angedrückt. Anschließend wird der Verbund durch 12 h Lagern unter Normalbedingungen abgebunden. Danach läßt sich die unbehandelte Folie von dem ausgehärteten Klebstoff, welcher an dem Karton haftet, abziehen, ohne daß der Karton beschädigt wird, d.h. der Verbund zwischen Karton und Polypropylenfolie ist sehr schwach.

Versucht man dagegen die behandelte Folie von dem Klebstoff bzw. von dem Karton abzuziehen, so gelingt dies nicht. Vielmehr lösen sich bei dem Versuch, die Folie von dem Verbund zu trennen, Teile des Kartons ab, d.h. der Verbund zwischen Folie und Karton zeigt eine hervorragende Haftung.

### Beispiel 2

Als zu behandelnde Polyolefinfolie eines herzustellenden Verbundes wird eine 20 »m dicke coextrudierte, biaxial gereckte Folie aus isotaktischem Polypropylen mit einer heißsiegelfähigen Polypropylen-Polyethylen-Siegelschicht der Fa. Wolff-Walsrode AG benutzt, die in 150 mm Breite und ca. 1000 m Länge auf einem Wickelkern aufgewickelt ist. Diese Folie wird in die unter Beispiel 1 beschriebene Vakuumanlage eingebaut. Gegenüber Beispiel 1 ist die Anlage derart verändert, daß der Abstand der Elektrode von der Leitwalze 100 mm beträgt.

Die Durchführung des Versuches zur Behandlung der Folie mittels eines Plasmas ist im wesentlichen wie unter Beispiel 1 beschrieben. Im Gegensatz zu Beispiel 1 beträgt die Spannung an die Elektrode -380 V, so daß ein Plasma mit einem Strom von 0,1 A brennt, d.h. in dem Fall von Beispiel 2 beträgt die Plasmaleistung ca. 38 W. Es ergibt sich damit eine Energiedichte auf der Folie von 0,05 Ws/cm².

Nach Abschluß der Vorbehandlung wird die Folie aus der Vakuumanlage entnommen und in einer anderen Anlage mit einer ca. 500 A dicken Al-Schicht bedampft. Verfahren zum Aufdampfen von Al sind literaturbekannt. Eine derartige Beschichtung kann z.B. dadurch erfolgen, daß Al aus einem durch direkten Stromdurchgang beheizten BN-Schiffchen oder aus einem mittels Elektronenstrahl beheizten Tiegel verdampft wird, und daß das Al sich auf der Folie, welche sich auf einer gekühlten Walze befindet, niederschlägt (siehe Frey/Kienel: Dünnschichttechnik VDI-Verlag, 1987, S. 572-592).

Ebenso wird eine unbehandelte Folie bedampft.

Auf die Metallschicht der beiden derart hergestellten Verbunde wird ein ca. 20 cm langer Streifen des Klebebandes 133 der Fa. Beiersdorf angebracht. Nach einer Lagerzeit von ca. 12 Stunden wird das Klebeband von beiden Verbunden abgezogen. Bei dem Verbund, bei der die Al-Schicht auf die vorbehandelte Polypropylenfolie aufgedampft wurde, bleibt die Al-Schicht auf der Folie haften, d.h. der Verbund weist eine hervorragende Haftung der Komponenten auf.

Bei dem Verbund, bei dem die Al-Schicht auf die unbehandelte Folie aufgebracht wurde, wird die Al-Schicht mit dem Klebeband durch die Folie abgezogen, d.h. der Verbund weist eine schlechte Haftung der Komponenten auf.

## Patentansprüche

1. Verfahren zur Modifizierung von Polyolefinfolien durch Behandlung der Polyolefinfolien mit einem Niederdruckplasma, dadurch gekennzeichnet, daß das Niederdruckplasma über Elektroden durch elektrische Felder mit Frequenzen bis 100 MHz angeregt wird, daß das Prozeßgas sauerstoffhaltige Gase enthält, daß der Partialdruck der sauerstoffhaltigen Prozeßgase mindestens 5 x 10⁻² mbar, die Energiedichte auf der Komponente aus Polyolefinen mindestens 0,01 Ws/cm² und maximal 10 Ws/cm², daß der Abstand der Elektroden von der Polyolefinfolie mindestens 60 mm ist und die Temperatur während der Behandlung maximal 30°C beträgt.

2. Verfahren gemäß Anspruch 1, dadurch gekennzeichnet, daß die Polyolefinfolien aus Polypropylen, Polyethylen, einem Copolymeren oder einer Mischung daraus bestehen.

3. Verfahren gemäß einem der Ansprüche 1 oder 2, dadurch gekennzeichnet, daß die Folien als extrudierte Folien vorliegen.

4. Verfahren gemäß einem der Ansprüche 1 bis 3, dadurch gekennzeichnet, daß die Folien aus mehreren Schichten aufgebaut sind.

5. Verfahren gemäß Anspruch 3 und 4, dadurch gekennzeichnet, daß die extrudierte Folie wenigstens monoaxial gereckt ist.

6. Verfahren gemäß Anspruch 4 und 5, dadurch gekennzeichnet, daß die Folien heißsiegelbare biaxial gereckte Polypropylenfolien sind.

7. Verfahren gemäß Anspruch 4 und 5, dadurch gekennzeichnet, daß die Folien biaxial gereckte Polypropylenfolien sind, die auf einer Seite eine Thermokaschierschicht tragen.

8. Verfahren gemäß einem der Ansprüche 1 bis 7, dadurch gekennzeichnet, daß die Temperaturen der Folie während der Plasmabehandlung zwischen -2°C und +10°C beträgt.

9. Verfahren nach einem der Ansprüche 1 bis 8, dadurch gekennzeichnet, daß das Prozeßgas O₂ und/oder ein anderes sauerstoffhaltiges Gas enthält.

10. Verfahren nach Anspruch 8, dadurch gekennzeichnet, daß zusätzliche He, Ne, Ar, Kr und Xe anwesend sind.

## Claims

1. A process for modifying polyolefine films by treatment of the polyolefine films with a low-pressure plasma, characterised in that the low-pressure plasma is energised via electrodes by electric fields with frequencies up to 100 MHz, that the process gas contains oxygen-containing gases, that the partial pressure of the oxygen-containing process gases is at least 5 x 10⁻² bar, the energy density on the component of polyolefines is at least 0.01 Ws/cm² and is a maximum of 10 Ws/cm², and that the distance of the electrodes from the polyolefine film is at least 60 mm and the maximum temperature during the treatment is 30°C.

2. A process according to claim 1, characterised in that the polyolefine films consist of polypropylene, polyethylene, a copolymer or a mixture thereof.

3. A process according to either one of claims 1 or 2, characterised in that the films are present as extruded films.

4. A process according to any one of claims 1 to 3, characterised in that the films are built up from a plurality of layers.

5. A process according to claims 3 and 4, characterised in that the extruded film is stretched at least monoaxially.

6. A process according to claims 4 and 5, characterised in that the films are heat-sealable, biaxially stretched polypropylene films.

7. A process according to claims 4 and 5, characterised in that the films are biaxially stretched polyolefine films bearing a thermally laminated layer on one side.

8. A process according to any one of claims 1 to 7, characterised in that the temperature of the film during plasma treatment is between -2°C and +10°C.

9. A process according to any one of claims 1 to 8, characterised in that the process gas contains O₂ and/or another oxygen-containing gas.

10. A process according to claim 8, characterised in that He, Ne, Ar, Kr and Xe are present in addition.

## Revendications

1. Procédé pour modifier des films de polyoléfine par traitement des films de polyoléfine par un plasma à faible pression, caractérisé en ce que le plasma à faible pression est excité au moyen d'électrodes par des champs électriques d'une fréquence jusqu'à 100 MHz, en ce que le gaz du procédé comprend des gaz contenant de l'oxygène, en ce que la pression partielle des gaz du procédé contenant de l'oxygène atteint au moins 5x10⁻² mbar, que la densité d'énergie sur les composants en polyoléfine atteint au minimum 0,01 Ws/cm² et au maximum 10 Ws/cm², en ce que la distance entre les électrodes et le film de polyoléfine atteint au moins 60 mm et que la température pendant le traitement atteint au maximum +30°C.

2. Procédé selon la revendication 1, caractérisé en ce que les films de polyoléfine sont constitués de polypropylène, de polyéthylène, d'un copolymère ou d'un mélange de ceux-ci.

3. Procédé selon l'une des revendications 1 ou 2, caractérisé en ce que les films se présentent sous forme de films extrudés.

4. Procédé selon l'une des revendications 1 à 3, caractérisé en ce que les films sont constitués de plusieurs couches.

5. Procédé selon les revendications 3 et 4, caractérisé en ce que le film extrudé est étiré au moins monoaxialement.

6. Procédé selon les revendications 4 et 5, caractérisé en ce que les films sont des films de polypropylène étirés biaxialement et scellables à chaud.

7. Procédé selon les revendications 4 et 5, caractérisé en ce que les films sont des films de polypropylène étirés biaxialement, qui comportent sur une face une couche thermocollée.

8. Procédé selon l'une des revendications 1 à 7, caractérisé en ce que les températures du film pendant le traitement par le plasma sont comprises entre -2°C et +10°C.

9. Procédé selon l'une des revendications 1 à 8, caractérisé en ce que le gaz de procédé contient O₂ et/ou un autre gaz contenant de l'oxygène.

10. Procédé selon la revendication 8, caractérisé en ce que les gaz He, Ne, Ar, Kr et Xe sont également présents.
